# EUROPÄISCHE PATENTSCHRIFT

(11) **EP 2 976 555 B1**
(45) Veröffentlichungstag und Bekanntmachung des Hinweises auf die Patenterteilung: **15.01.2020**
(21) Anmeldenummer: 14712208.9
(22) Anmeldetag: 14.03.2014
(51) Int. Cl.: F16H 61/28, F16H 61/32

(54) **AKTUATOREINRICHTUNG FÜR EIN GETRIEBE EINES KRAFTFAHRZEUGS SOWIE ENTSPRECHENDES GETRIEBE EINES KRAFTFAHRZEUGS**
ACTUATOR DEVICE FOR A GEARBOX OF A MOTOR VEHICLE AND CORRESPONDING GEARBOX FOR A MOTOR VEHICLE
DISPOSITIF D'ACTIONNEMENT POUR UNE BOÎTE DE VITESSES D'UN VÉHICULE AUTOMOBILE ET BOÎTE DE VITESSES CORRESPONDANTE D'UN VÉHICULE AUTOMOBILE

(30) Priorität: 22.03.2013 DE 102013004953
(43) Veröffentlichungstag der Anmeldung: 27.01.2016
(73) Patentinhaber: Audi AG, 85045 Ingolstadt (DE)
(72) Erfinder: HUMMEL, Steffen, 85055 Ingolstadt (DE)
(74) Vertreter: Lehle, Josef
(86) Internationale Anmeldenummer: PCT/EP2014/000700
(87) Internationale Veröffentlichungsnummer: WO 2014/146771

(56) Entgegenhaltungen:
- EP-A1- 2 143 979
- WO-A1-2004/081418
- DE-A1- 4 007 120
- DE-A1-102005 058 406
- DE-A1-102010 043 685
- DE-B3-102004 052 804
- DE-C1- 10 205 689

## Beschreibung

Die Erfindung betrifft eine Aktuatoreinrichtung für ein Getriebe eines Kraftfahrzeugs, mit mehreren Schaltwellen, die jeweils in einer ersten Richtung zwischen mehreren Wahlpositionen und in einer zweiten Richtung zwischen mehreren Schaltpositionen verlagerbar sind und die jeweils über ein Verbindungselement verfügen, das in zumindest einer der Wahlpositionen mit wenigstens einer Schaltschiene des Getriebes zum Übertragen einer Bewegung der Schaltschiene in der zweiten Richtung auf die Schaltschiene in Wirkverbindung steht. Die Erfindung betrifft weiterhin ein entsprechendes Getriebe eines Kraftfahrzeugs.

Das Getriebe weist die wenigstens eine Schaltschiene auf, bevorzugt jedoch mehrere Schaltschienen. Jede Schaltschiene steht beispielsweise mit einer Schaltmuffe und/oder einem Synchronring des Getriebes in Wirkverbindung. Dies ist derart vorgesehen, dass durch das Verlagern der Schaltschiene in eine bestimmte Position ein bestimmter Gang des Getriebes ausgewählt und eingestellt beziehungsweise eingelegt wird. Insbesondere kann jede Schaltschiene in mehrere Positionen gebracht werden, wobei eine erste der Positionen eine Freilaufposition ist, in der mittels dieser Schaltschiene kein Gang, sondern vielmehr ein Leerlauf, an dem Getriebe eingestellt ist. In einer zweiten der Positionen der Schaltschiene wird entsprechend ein bestimmter Gang ausgewählt und an dem Getriebe eingestellt. Optional können die Positionen eine dritte Position umfassen, in welcher ein anderer Gang ausgewählt und an dem Getriebe eingestellt ist. Beispielsweise kann also jede Schaltschiene in drei Positionen gebracht werden, wobei diese Positionen einem Leerlauf, einem ersten von mehreren Gängen des Getriebes oder einem zweiten der Gänge entsprechen.

Selbstverständlich kann eine beliebige Anzahl derartiger Schaltschienen vorgesehen sein, sodass durch entsprechende Anordnung der Schaltschienen ein bestimmter Gang aus einer Vielzahl von verschiedenen Gängen ausgewählt und an dem Getriebe eingestellt werden kann. Für die dabei notwendige Verlagerung der Schaltschienen ist die Aktuatoreinrichtung vorgesehen, welche dem Getriebe des Kraftfahrzeugs zugeordnet ist. Die Aktuatoreinrichtung verfügt über die mehreren Schaltwellen. Jede dieser Schaltwellen kann über das jeweilige Verbindungselement in Wirkverbindung mit wenigstens einer der Schaltschienen des Getriebes gebracht werden. Jeder Schaltwelle ist dabei zumindest eine der Schaltschienen zugeordnet. Alternativ kann auch eine Zuordnung von mehreren unterschiedlichen Schaltschienen zu zumindest einer der Schaltwellen, insbesondere zu jeder Schaltwelle, vorgesehen sein.

Die Schaltwellen können jeweils in einer ersten Richtung zwischen mehreren Wahlpositionen und in einer zweiten Richtung zwischen mehreren Schaltpositionen verlagert werden. Durch das Verlagern der jeweiligen Schaltwelle in eine bestimmte der Wahlpositionen wird dabei festgelegt, ob und mit welcher Schaltschiene diese Schaltwelle in Wirkverbindung tritt. Durch eine Verlagerung zwischen den mehreren Schaltpositionen wird dagegen die durch die Wahlposition ausgewählte Schaltschiene verlagert, sodass gemäß den vorstehenden Ausführungen ein bestimmter Gang ausgewählt und an dem Getriebe eingestellt wird.

Aus dem Stand der Technik ist beispielsweise die Druckschrift DE 10 2010 050 382 A1 bekannt, welche ein Betätigungssystem für eine elektromagnetische Synchronisierungseinrichtung beschreibt. Dabei kann mithilfe von Steuerspulen eine Schaltschiene und mithin eine Schaltgabel in drei verschiedene Positionen gebracht werden. Der Stand der Technik zeigt weiterhin die Druckschrift DE 102 05 689 C1. Diese betrifft eine Schaltvorrichtung für ein Stirnradgetriebe, das wenigstens zwei parallele Wellen, eine erste Mehrzahl von Radsätzen, die Gänge des Stirnradgetriebes bilden, und eine entsprechende Mehrzahl von Schaltkupplungen zum Ein- und Auslegen der Gänge aufweist. Die Schaltvorrichtung verfügt über eine Aktuatoreinheit, die dazu ausgelegt ist, die Schaltkupplungen durch axiale oder Drehbewegungen einer Schaltwelleneinrichtung anzuwählen und durch Dreh- oder axiale Bewegungen der Schaltwelleneinrichtung zu betätigen. Dabei ist die Schaltwelleneinrichtung durch eine erste und eine zweite Schaltwelle gebildet, die koaxial zueinander angeordnet und in Schaltbewegungsrichtung relativ zueinander beweglich ausgebildet sind. Ferner ist die erste Schaltwelle wenigstens einer Schaltkupplung und die zweite Schaltwelle wenigstens einer anderen Schaltkupplung zugeordnet.

Es ist nun Aufgabe der Erfindung, eine Aktuatoreinrichtung für ein Getriebe eines Kraftfahrzeugs vorzuschlagen, welche gegenüber dem bekannten Stand der Technik einfacher und kostengünstiger aufgebaut ist und dennoch ein schnelles Auswählen und Einstellen des gewünschten Gangs ermöglicht.

Dies wird erfindungsgemäß mit einer Aktuatoreinrichtung mit den Merkmalen des Anspruchs 1 erreicht. Dabei ist vorgesehen, dass die Schaltwellen derart aneinander gelagert sind, dass sie in der ersten Richtung gegeneinander beweglich und in der zweiten Richtung zueinander festgelegt sind, wobei die Wahlpositionen der Schaltwellen mittels mehreren ersten Stelleinrichtungen unabhängig einstellbar sind, und wobei die Schaltwellen mittels einer zweiten Stelleinrichtung gemeinsam zwischen den Schaltpositionen verlagerbar sind. Es ist also vorgesehen, dass jeder Schaltwelle eine eigene erste Stelleinrichtung zugeordnet ist. Auf diese Art und Weise kann jede Schaltwelle unabhängig von den anderen Schaltwellen in die gewünschte Wahlposition verlagert werden. Die Wahlposition jeder Schaltwelle ist mithin vollständig unabhängig von den Wahlpositionen der anderen Schaltwellen auswählbar und einstellbar.

Dagegen ist es vorgesehen, dass allen Schaltwellen eine gemeinsame, zweite Stelleinrichtung zugeordnet ist. Die Aktuatoreinrichtung verfügt mithin zwar über mehrere erste Stelleinrichtungen, jedoch lediglich über eine einzige zweite Stelleinrichtung. Diese dient dazu, alle Schaltwellen gemeinsam zwischen den Schaltpositionen zu verlagern, sodass alle Schaltwellen stets in derselben Schaltposition, welche aus den verfügbaren Schaltpositionen ausgewählt ist, vorliegen. Im Vergleich mit Aktuatoreinrichtungen, bei welchen jeder Schaltwelle eine erste Stelleinrichtung sowie eine zweite Stelleinrichtung zugeordnet ist, kann mit der erfindungsgemäßen Aktuatoreinrichtung auf eine Vielzahl von zweiten Stelleinrichtungen verzichtet werden.

Gleichzeitig werden die Vorteile der aus dem Stand der Technik bekannten Aktuatoreinrichtungen weitestgehend erhalten. Insbesondere ist es auch mit der erfindungsgemäßen Aktuatoreinrichtung möglich, mehrere Gänge gleichzeitig auszuwählen und einzustellen, was insbesondere bei einer Ausgestaltung des Getriebes als Doppelkupplungsgetriebe von großer Bedeutung ist. Bei einer solchen Ausgestaltung als Doppelkupplungsgetriebe sind mehrere Teilgetriebe, insbesondere zwei Teilgetriebe, vorgesehen. Jedem dieser Teilgetriebe ist wenigstens eine Schaltwelle der Aktuatoreinrichtung und mithin eine eigene erste Stelleinrichtung zugeordnet. Dennoch steht dem Doppelkupplungsgetriebe lediglich eine einzige zweite Stelleinrichtung zur Verfügung, sodass alle Schaltwellen des Doppelkupplungsgetriebes gemeinsam zwischen den mehreren Schaltpositionen verlagerbar sind beziehungsweise verlagert werden.

Grundsätzlich kann eine beliebige Anzahl von Schaltwellen vorgesehen sein, wobei bevorzugt wenigstens zwei, wenigstens drei oder wenigstens vier Schaltwellen vorliegen. Die Schaltwellen sind derart aneinander gelagert, dass sie in der ersten Richtung gegeneinander frei beweglich sind, zumindest innerhalb bestimmter Grenzen. In der zweiten Richtung sollen sie dagegen zueinander festgelegt sein, sodass bei einer Verlagerung einer der Schaltwellen zwischen verschiedenen Schaltpositionen stets alle Schaltwellen in die ausgewählte Schaltposition verlagert werden.

In einer weiteren Ausgestaltung der Erfindung ist vorgesehen, dass jeder Schaltwelle nur eine oder zumindest zwei Schaltschienen zugeordnet sind. Die Anzahl der Schaltschienen, welche jeder Schaltwelle zugeordnet ist, wird insbesondere anhand der Anzahl der insgesamt vorhandenen Gänge des Getriebes und der Anzahl der Schaltwellen bestimmt. Sind beispielsweise vier Schaltschienen vorgesehen, so müssen bei insgesamt zwei Schaltwellen jeder der Schaltwellen wenigstens zwei der Schaltschienen zugeordnet sein. Sind dagegen mehr Schaltwellen, beispielsweise vier Schaltwellen, vorgesehen, so kann jeder der Schaltwellen lediglich eine einzige Schaltschiene zugeordnet sein. Dennoch können alle Gänge des Getriebes mittels der Aktuatoreinrichtung angesteuert werden.

Eine Weiterbildung der Erfindung sieht vor, dass die Schaltwellen um eine gemeinsame Drehachse drehbar gelagert sind. Die Schaltwellen sind mithin koaxial zueinander angeordnet. Beispielsweise ist zwischen den Schaltwellen oder zwischen einer Zwischenwelle und wenigstens einer der Schaltwellen eine Welle-Nabe-Verbindung vorgesehen, insbesondere also eine formschlüssige Verbindung, welche ein Verlagern der Schaltwellen in Richtung der gemeinsamen Drehachse zulässt, eine Drehbewegung um die Drehachse jedoch zwischen allen Schaltwellen überträgt. Beispielsweise ist die Welle-Nabe-Verbindung als Zahnverbindung ausgeführt.

Eine vorteilhafte Ausgestaltung der Erfindung sieht vor, dass jede Schaltwelle eine Rückstelleinrichtung aufweist, die sie in Richtung einer als Neutralposition vorliegenden Wahlposition drängt. Die Neutralposition ist diejenige der mehreren Wahlpositionen, in welcher die Schaltwelle keine Wirkverbindung zu der ihr zugeordneten Schaltwelle beziehungsweise den ihr zugeordneten Schaltwellen aufweist. Wird also die Schaltposition der Schaltwellen verändert, so findet keine Betätigung derjenigen Schaltschienen statt, welche einer Schaltwelle zugeordnet sind, die sich momentan in ihrer Neutralposition befindet. Mithilfe der Rückstelleinrichtung wird erreicht, dass die Schaltwelle nicht explizit mittels der ersten Stelleinrichtung verlagert werden muss, um die Neutralposition zu erreichen.

Eine besonders vorteilhafte Ausgestaltung der Erfindung sieht vor, dass die erste Richtung die bezüglich der Drehachse axiale Richtung und/oder die zweite Richtung die bezüglich der Drehachse umfängliche Richtung ist. Bei einer Verlagerung der Schaltwellen in der ersten Richtung findet also eine Transversalbewegung beziehungsweise bei einer Verlagerung in die zweite Richtung eine Drehbewegung statt. Bei einer derartigen Ausgestaltung ist beispielsweise eine Wirkverbindung zwischen den Schaltwellen mittels der vorstehend beschriebenen Welle-Nabe-Verbindung realisiert. Alternativ kann jedoch auch eine umgekehrte Ausführungsform realisiert sein, bei welcher die erste Richtung die bezüglich der Drehachse umfängliche Richtung und die zweite Richtung die bezüglich der Drehachse axiale Richtung ist.

In einer Weiterbildung der Erfindung ist vorgesehen, dass die ersten Stelleinrichtungen als Magnetstelleinrichtungen ausgebildet sind. Das Verlagern der Schaltwellen in die jeweils gewünschte Wahlposition erfolgt also mithilfe der Magnetstelleinrichtungen, welche zu diesem Zweck wenigstens eine Magnetspule aufweisen, die dazu ausgebildet ist, bei einer Bestromung eine Verlagerung der jeweiligen Schaltwelle in der ersten Richtung zu bewirken. Die Verwendung von derartigen Magnetstelleinrichtungen hat den Vorteil, dass äußerst kurze Stellzeiten erzielbar sind.

Eine weitere vorteilhafte Ausgestaltung der Erfindung sieht vor, dass die zweite Stelleinrichtung als mit den Schaltwellen wirkverbundener Elektromotor ausgeführt ist. Der Elektromotor ist dazu vorgesehen, eine Drehbewegung zu erzeugen und diese auf die Schaltwellen zu übertragen. Beispielsweise ist der Elektromotor unmittelbar oder über ein Getriebe mit einer der Schaltwellen oder einer Zwischenwelle wirkverbunden.

Eine bevorzugte Ausgestaltung der Erfindung sieht vor, dass die Schaltwellen über eine Zwischenwelle mit der zweiten Stelleinrichtung wirkverbunden sind. Gemäß den vorstehenden Ausführungen liegt also keine unmittelbare Wirkverbindung zwischen dem Elektromotor und den Schaltwellen vor. Vielmehr ist der Elektromotor an die Zwischenwelle angeschlossen, beispielsweise über das Getriebe oder unmittelbar. An die Zwischenwelle anschließend ist wenigstens eine der Schaltwellen angeordnet, sodass zwischen dieser und der wenigstens einen Schaltwelle das Drehmoment des Elektromotors übertragbar ist.

Schließlich kann vorgesehen sein, dass die Schaltwellen drehfest und axial verlagerbar an der Zwischenwelle gelagert sind. Dies ist insbesondere dann der Fall, wenn genau zwei Schaltwellen vorgesehen sind, welche beispielsweise an gegenüberliegenden Seiten der Zwischenwelle an diese angeschlossen sind. In diesem Fall ist beispielsweise zwischen jeder der Schaltwellen und der Zwischenwelle eine der vorstehend beschriebenen Welle-Nabe-Verbindungen realisiert. Bei einer Drehbewegung der Zwischenwelle wird diese also auf die an die Zwischenwelle angeschlossenen Schaltwellen übertragen, sodass mithilfe der zweiten Stelleinrichtung diese Schaltwellen gemeinsam zwischen den mehreren Schaltpositionen verlagerbar sind.

Die Erfindung betrifft weiterhin ein Getriebe eines Kraftfahrzeugs, mit einer Aktuatoreinrichtung, insbesondere gemäß den vorstehenden Ausführungen, wobei die Aktuatoreinrichtung mehrere Schaltwellen aufweist, die jeweils in einer ersten Richtung zwischen mehreren Wahlpositionen und in einer zweiten Richtung zwischen mehreren Schaltpositionen verlagerbar sind und die jeweils über ein Verbindungselement verfügen, das in zumindest einer der Wahlpositionen mit wenigstens einer Schaltschiene des Getriebes zum Übertragen einer Bewegung der Schaltwelle in der zweiten Richtung auf die Schaltschiene in Wirkverbindung steht. Dabei ist vorgesehen, dass die Schaltwellen derart aneinander gelagert sind, dass sie in der ersten Richtung gegeneinander beweglich und in der zweiten Richtung zueinander festgelegt sind, wobei die Wahlpositionen der Schaltwellen mittels mehreren ersten Stelleinrichtungen unabhängig einstellbar sind, und wobei die Schaltwellen mittels einer zweiten Stelleinrichtung gemeinsam zwischen den Schaltpositionen verlagerbar sind. Auf die Vorteile einer derartigen Ausgestaltung der Aktuatoreinrichtung sowie des Getriebes wurde bereits hingewiesen. Die Aktuatoreinrichtung sowie das Getriebe können gemäß den vorstehenden Ausführungen weitergebildet sein, sodass insoweit auf diese verwiesen wird. Das Getriebe liegt beispielsweise als Mehrfachkupplungsgetriebe, insbesondere als Doppelkupplungsgetriebe, vor.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer ersten Ausführungsform einer Aktuatoreinrichtung für ein Getriebe eines Kraftfahrzeugs,
- Figur 2: eine schematische Darstellung einer zweiten Ausführungsform der Aktuatoreinrichtung,
- Figur 3: eine schematische Darstellung einer ersten Variante der ersten Ausführungsform,
- Figur 4: eine schematische Darstellung einer zweiten Variante der ersten Ausführungsform,
- Figur 5: eine schematische Darstellung einer dritten Variante der ersten Ausführungsform,
- Figur 6: eine schematische Darstellung einer vierten Variante der ersten Ausführungsform,
- Figur 7: eine weitere schematische Darstellung der ersten Variante der ersten Ausführungsform,
- Figur 8: eine schematische Darstellung einer dritten Ausführungsform der Aktuatoreinrichtung in einer ersten Ansicht, und
- Figur 9: eine schematische Darstellung der dritten Ausführungsform der Aktuatoreinrichtung in einer zweiten Ansicht.

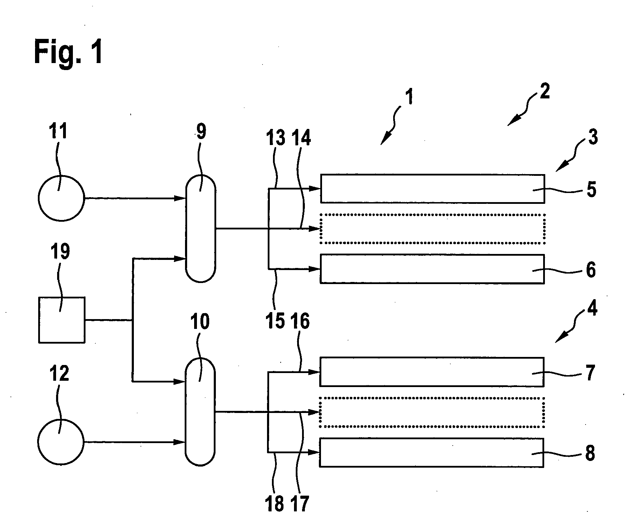

Die Figur 1 zeigt eine schematische Darstellung einer Aktuatoreinrichtung 1 als Teil eines Getriebes 2 eines Kraftfahrzeugs. Das Getriebe liegt insbesondere als Doppelkupplungsgetriebe mit zwei Teilgetrieben 3 und 4 vor, wobei dem ersten Teilgetriebe 3 Schaltschienen 5 und 6 und dem zweiten Teilgetriebe 4 Schaltschienen 7 und 8 zugeordnet sind. Jede der Schaltschienen 5 bis 8 kann in wenigstens zwei Positionen, insbesondere jedoch mehr als zwei Positionen, verlagert werden. Beispielsweise ist eine Verlagerung jeder der Schaltschienen 5 bis 8 in eine hinter der Zeichenebene liegende erste Position, eine in der Zeichenebene liegende zweite Position und eine vor der Zeichenebene liegende dritte Position vorgesehen. Dabei ist bevorzugt in der ersten und der dritten Position jeweils ein bestimmter Gang des Teilgetriebes 3 beziehungsweise 4 ausgewählt und eingelegt, während in der zweiten Position eine Leerlaufposition vorliegt, in welcher kein Gang mittels der jeweiligen Schaltschiene 5, 6, 7 oder 8 eingelegt ist.

In der hier dargestellten ersten Ausführungsform ist jedem Teilgetriebe 3 und 4 eine Schaltwelle 9 beziehungsweise 10 zugeordnet. Jede der Schaltwellen 9 und 10 kann in einer ersten Richtung zwischen mehreren Wahlpositionen verlagert werden, wozu jeder Schaltwelle 9 und 10 jeweils eine erste Stelleinrichtung 11 beziehungsweise 12 zugeordnet ist. Wie durch die Pfeile 13, 14, 15, 16, 17 und 18 angedeutet, kann jede der Schaltwellen 9 und 10 in drei verschiedene Wahlpositionen verlagert werden. Die Wahlpositionen der Schaltwelle 9 sind durch die Pfeile 13, 14 und 15 gekennzeichnet, während die Wahlpositionen der Schaltwelle 10 durch die Pfeile 16, 17 und 18 angedeutet sind. In der Wahlposition 13 liegt über ein hier nicht gesondert dargestelltes Verbindungselement eine Wirkverbindung der Schaltwelle 9 zu der Schaltschiene 5 vor, während dies für die Wahlposition 15 zu der Schaltschiene 6 der Fall ist. Im Falle der Schaltwelle 10 liegt in der Wahlposition 16 eine Wirkverbindung zu der Schaltschiene 7 und in der Wahlposition 18 eine Wirkverbindung zu der Schaltschiene 8 vor.

Das bedeutet, dass bei einer Verlagerung der jeweiligen Schaltwelle 9 beziehungsweise 10 zwischen mehreren Schaltpositionen, die durch die jeweilige Wahlposition ausgewählte Schaltschiene 5, 6, 7 oder 8 zusammen mit der jeweiligen Schaltwelle 9 beziehungsweise 10 verlagert wird. In der Wahlposition 14 liegt dagegen keine Wirkverbindung der Schaltwelle 9 zu einer der Schaltschienen 5 und 6 vor. Entsprechendes gilt für die Schaltwelle 10 in der Wahlposition 17, in welcher keine Wirkverbindung zu den Schaltschienen 7 und 8 hergestellt ist. Während die Wahlpositionen der Schaltwellen 9 und 10 unabhängig voneinander ausgewählt und eingestellt werden können, ist dies für die Schaltpositionen nicht der Fall. Zwar kann jede der Schaltwellen 9 und 10 zwischen mehreren Schaltpositionen verlagert werden, dies ist jedoch stets gemeinsam mittels einer zweiten Stelleinrichtung 19 vorgesehen. Zu diesem Zweck sind die Schaltwellen 9 und 10 derart aneinander gelagert, dass sie in der ersten Richtung gegeneinander beweglich und in der zweiten Richtung zueinander festgelegt sind.

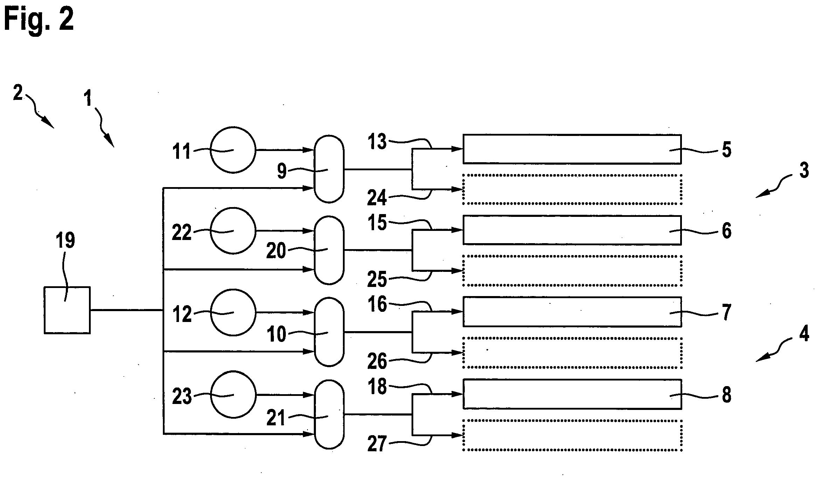

Die Figur 2 zeigt eine zweite Ausführungsform der Aktuatoreinrichtung 1. Grundsätzlich wird auf die vorstehenden Ausführungen verwiesen und lediglich auf die Unterschiede eingegangen. Es wird deutlich, dass jedem der Teilgetriebe 3 und 4 nun nicht lediglich eine Schaltwelle 9 beziehungsweise 10 zugeordnet sind, sondern vielmehr jeweils zwei Schaltwellen 9 und 20 beziehungsweise 10 und 21. Auch hier ist wiederum jeder der Schaltwellen 9, 10, 20 und 21 jeweils eine erste Stelleinrichtung 11, 12, 22 beziehungsweise 23 zugeordnet, sodass jede der Schaltwellen 9, 10, 20 und 21 unabhängig von den jeweils anderen Schaltwellen in die gewünschte Wahlposition gebracht werden kann.

Es wird zudem deutlich, dass jeder der Schaltwellen 9, 10, 20 und 21 lediglich eine der Schaltschienen 5, 6, 7 und 8 zugeordnet ist. Entsprechend kann jede der Schaltwellen 9, 10, 20 und 21 sowohl in eine Wahlposition 13, 15, 16 und 18 gebracht werden, in welcher sie mit der jeweiligen Schaltschiene 5, 6, 7 oder 8 in Wirkverbindung steht. In einer anderen Wahlposition, gekennzeichnet durch die Pfeile 24, 25, 26 und 27 liegt dagegen keine Wirkverbindung vor.

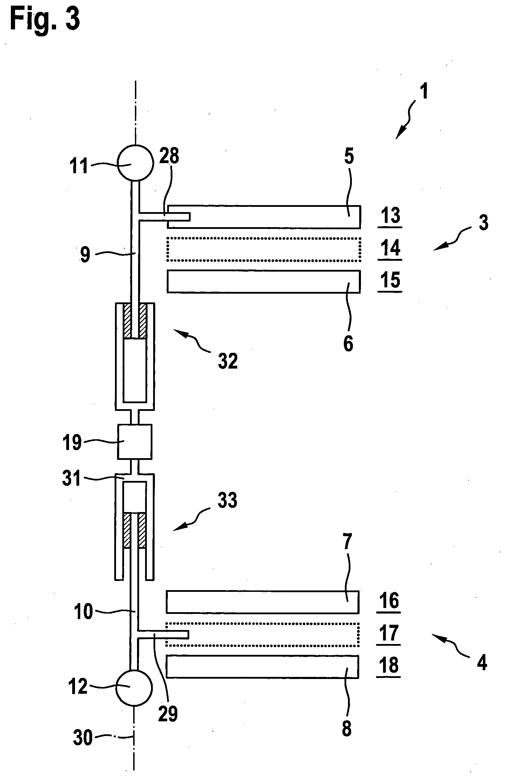

Die Figur 3 zeigt eine erste Variante der ersten Ausführungsform der Aktuatoreinrichtung 1. Insoweit wird auf die vorstehenden Ausführungen verwiesen. Erkennbar ist hier nun, dass an jeder Schaltwelle 9 und 10 ein Verbindungselement 28 beziehungsweise 29 zum Herstellen der jeweiligen Wirkverbindung zu der Schaltschiene 5 oder 6 beziehungsweise der Schaltschiene 7 oder 8 vorgesehen ist. Die verschiedenen Wahlpositionen sind durch die Bezugszeichen 13 bis 18 angedeutet. Es ist auch erkennbar, dass die Schaltwellen 9 und 10 um eine gemeinsame Drehachse drehbar gelagert sind. Die erste Richtung, welche dem Einstellen der gewünschten Wahlposition dient, ist mithin die bezüglich der Drehachse 30 axiale Richtung, während die zweite Richtung, die zum Einstellen der Schaltposition dient, die bezüglich der Drehachse 30 umfängliche Richtung ist.

Die ersten Stelleinrichtungen 11 und 12 sind als Magnetstelleinrichtungen ausgebildet, welches ein axiales Verlagern der jeweiligen Schaltwelle 9 beziehungsweise 10 ermöglichen. Die zweite Stelleinrichtung 19 dagegen ist als Elektromotor ausgeführt, welche über eine Zwischenwelle 31 mit beiden Schaltwellen 9 und 10 wirkverbunden ist.

Die Zwischenwelle 31 ist lediglich um die Drehachse 30 drehbar gelagert, kann also nicht in axialer Richtung verschoben werden. Um dennoch ein Verlagern der Schaltwellen 9 und 10 zwischen den verschiedenen Wahlpositionen zuzulassen, sind zwischen der Zwischenwelle 31 und den Schaltwellen 9 und 10 Welle-Nabe-Verbindungen 32 beziehungsweise 33 vorgesehen. Über diese Welle-Nabe-Verbindungen 32 und 33 sind die Schaltwellen 9 und 10 drehfest und axial verlagerbar an der Zwischenwelle 31 gelagert.

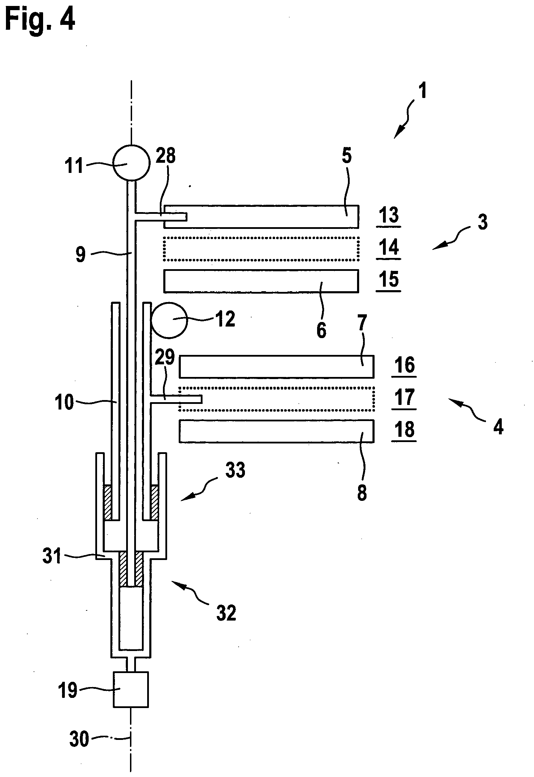

Die Figur 4 zeigt eine zweite Variante der ersten Ausführungsform der Aktuatoreinrichtung 1. Während bei der ersten Variante die Schaltwellen 9 und 10 auf gegenüberliegenden Seiten der Zwischenwelle 31 angeordnet waren, so sind sie nun auf derselben Seite vorgesehen. Dabei sind die Schaltwellen 9 und 10 koaxial zueinander angeordnet, wobei jedoch die Schaltwelle 9 die Schaltwelle 10 durchgreift. Die Schaltwelle 10 ist insoweit als Hohlwelle ausgeführt.

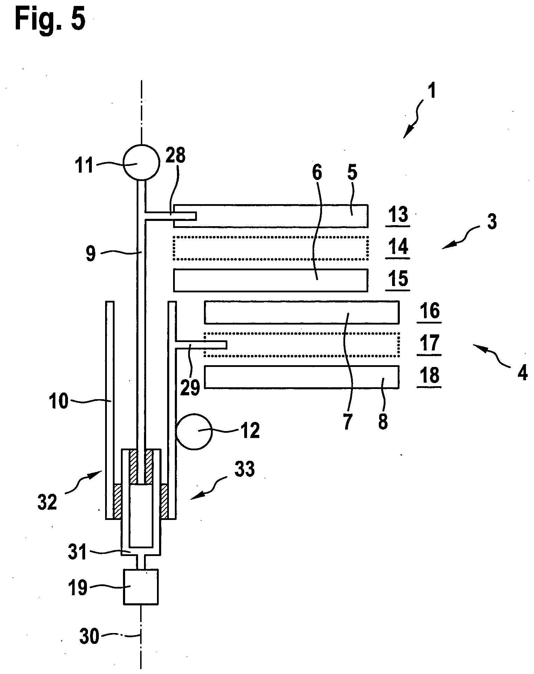

Die Figur 5 zeigt eine dritte Variante der ersten Ausführungsform. Grundsätzlich wird weder auf die vorstehenden Ausführungen verwiesen, insbesondere hinsichtlich der zweiten Variante der ersten Ausführungsform. Der Unterschied zu dieser liegt im Wesentlichen darin, dass die Schaltwelle 10 nun derart als Hohlwelle ausgeführt ist, dass auch die Zwischenwelle 31 bereichsweise in ihr aufgenommen ist. Entsprechend ist die Welle-Nabe-Verbindung 33 zwischen einer Außenseite der Zwischenwelle 31 und einer Innenwand der Schaltwelle 10 realisiert.

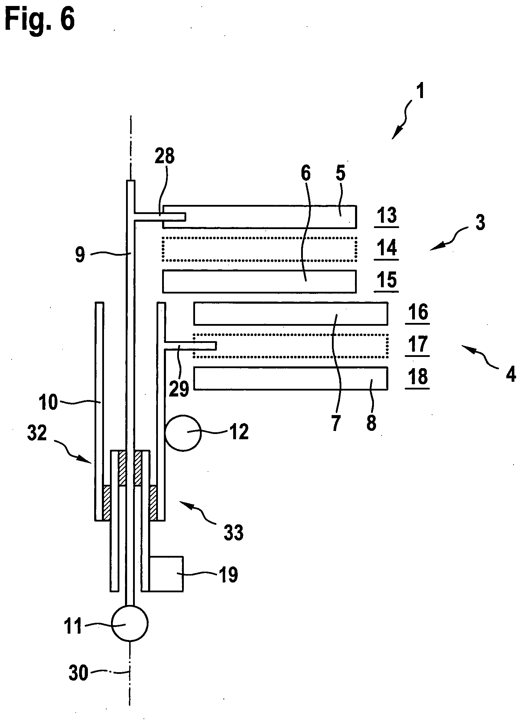

Die Figur 6 zeigt eine vierte Variante der ersten Ausführungsform der Aktuatoreinrichtung 1. Auch hier wird auf die vorstehenden Ausführungen verwiesen. Der Unterschied zu der dritten Variante liegt im Wesentlichen darin, dass die Schaltwelle 9 nun die Zwischenwelle 31 in axialer Richtung vollständig durchgreift, sodass entsprechend die zweite Stelleinrichtung 19 an einer alternativen Position angeordnet werden muss. Dies ermöglicht eine in axialer Richtung äußerst platzsparende Anordnung.

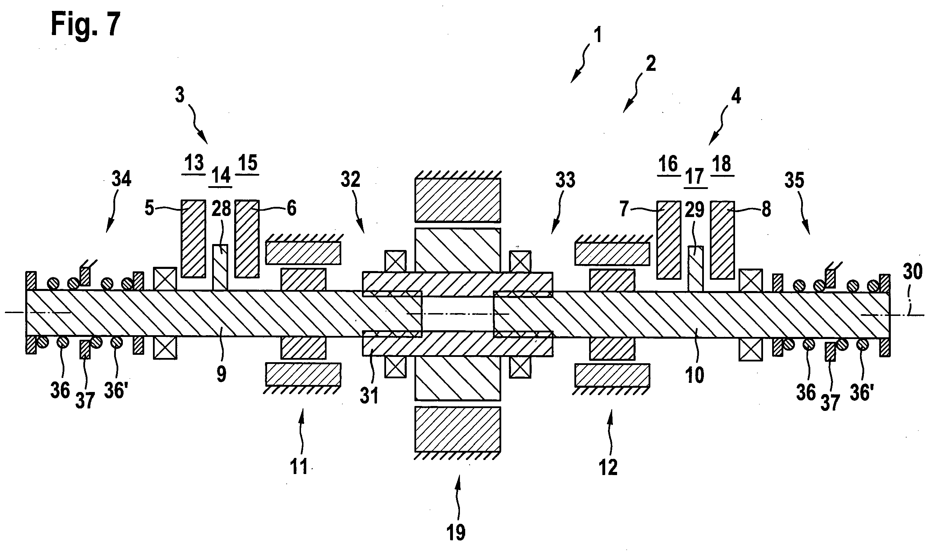

Die Figur 7 zeigt eine schematische Darstellung der ersten Variante der ersten Ausführungsform, sodass insoweit auf die vorstehenden Ausführungen verwiesen wird. Es ist erkennbar, dass jeder Schaltwelle 9 und 10 jeweils eine Rückstelleinrichtung 34 beziehungsweise 35 zugeordnet ist. Jede der Rückstelleinrichtungen 34 und 35 besteht im Wesentlichen aus mindestens einem Federelement 36 sowie einem ortsfestem Referenzelement 37. Beispielsweise sind zwei Federelemente 36 und 36' vorgesehen, welche gegeneinander gerichtete Federkräfte auf die jeweilige Schaltwelle 9 beziehungsweise 10 aufbringen können. Die Rückstelleinrichtungen 34 und 35 dienen dazu, die jeweilige Schaltwelle 9 beziehungsweise 10 in eine als Neutralposition vorliegende Wahlposition zu drängen, in welcher über das Verbindungselement 28 beziehungsweise 29 keine Wirkverbindung zu den Schaltschienen 5 und 6 beziehungsweise 7 und 8 hergestellt ist.

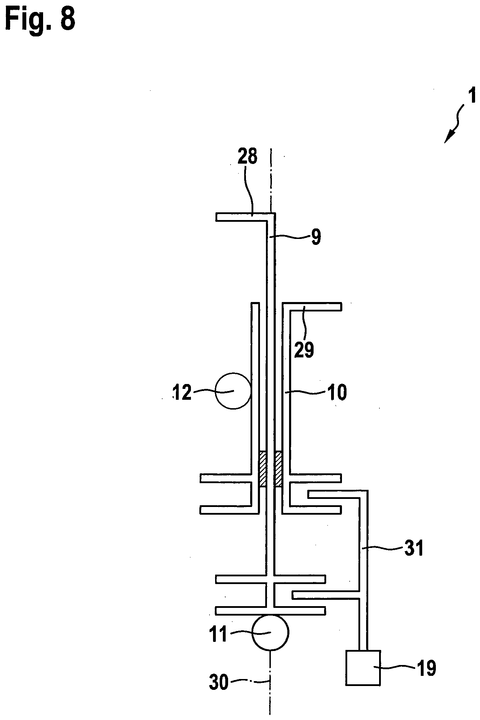

Die Figur 8 zeigt eine schematische Darstellung einer dritten Ausführungsform der Aktuatoreinrichtung 1, wobei eine Draufsicht vorliegt, sodass die Drehachse 30 in der Zeichenebene liegt. Grundsätzlich wird auf die vorstehenden Ausführungen verwiesen. Hier ist es nun vorgesehen, dass die erste Richtung die bezüglich der Drehachse umfängliche Richtung und die zweite Richtung die bezüglich der Drehachse axiale Richtung ist. Entsprechend kann mittels der ersten Stelleinrichtungen 11 und 12 ein Rotieren der jeweiligen Schaltwelle 9 beziehungsweise 10 vorgenommen werden. Die zweite Stelleinrichtung 19 dient dagegen dem gemeinsamen Verlagern der Schaltwellen 9 und 10 in axialer Richtung.

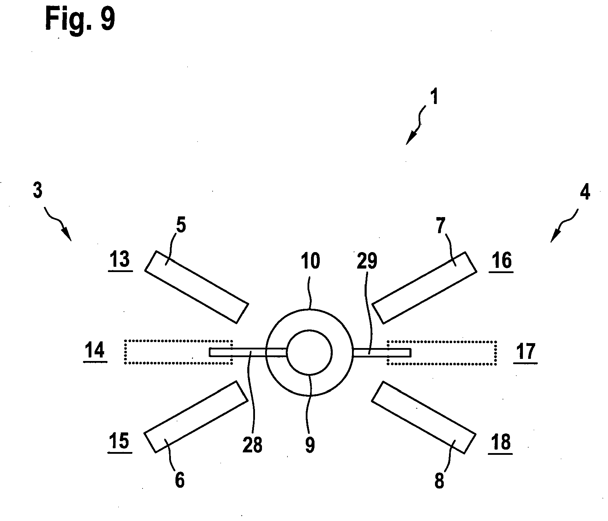

Die Figur 9 zeigt schließlich eine weitere Ansicht der dritten Ausführungsform, wobei hier eine Seitenansicht beziehungsweise Seitenschnittansicht vorliegt, bei welcher die Drehachse 30 senkrecht auf der Zeichenebene steht.

### BEZUGSZEICHENLISTE

- 1: Aktuatoreinrichtung
- 2: Getriebe
- 3: Teilgetriebe
- 4: Teilgetriebe
- 5: Schaltschiene
- 6: Schaltschiene
- 7: Schaltschiene
- 8: Schaltschiene
- 9: Schaltwelle
- 10: Schaltwelle
- 11: 1. Stelleinrichtung
- 12: 1. Stelleinrichtung
- 13: Pfeil
- 14: Pfeil
- 15: Pfeil
- 16: Pfeil
- 17: Pfeil
- 18: Pfeil
- 19: 2. Stelleinrichtung
- 20: Schaltwelle
- 21: Schaltwelle
- 22: 1. Stelleinrichtung
- 23: 1. Stelleinrichtung
- 24: Pfeil
- 25: Pfeil
- 26: Pfeil
- 27: Pfeil
- 28: Verbindungselement
- 29: Verbindungselement
- 30: Drehachse
- 31: Zwischenwelle
- 32: Welle-Nabe-Verbindung
- 33.: Welle-Nabe-Verbindung
- 34: Rückstelleinrichtung
- 35: Rückstelleinrichtung
- 36: Federelement
- 37: Referenzelement

## Patentansprüche

1. Aktuatoreinrichtung (1) für ein Getriebe (2) eines Kraftfahrzeugs, mit mehreren Schaltwellen (9,10,20,21), die jeweils in einer ersten Richtung zwischen mehreren Wahlpositionen (13,14,15,16,17,18) und in einer zweiten Richtung zwischen mehreren Schaltpositionen verlagerbar sind und die jeweils über ein Verbindungselement (28,29) verfügen, das in zumindest einer der Wahlpositionen (13,14,15,16,17, 18) mit wenigstens einer Schaltschiene (5,6,7,8) des Getriebes (2) zum Übertragen einer Bewegung der Schaltwelle (9,10,20,21) in der zweiten Richtung auf die Schaltschiene (5,6,7,8) in Wirkverbindung steht, **dadurch gekennzeichnet, dass** die Schaltwellen (9,10,20,21) derart aneinander gelagert sind, dass sie in der ersten Richtung gegeneinander beweglich und in der zweiten Richtung zueinander festgelegt sind, wobei die Wahlpositionen (13,14,15,16,17,18) der Schaltwellen (9,10,20,21) mittels mehreren ersten Stelleinrichtungen (11,12,22,23) unabhängig einstellbar sind, und wobei die Schaltwellen (9,10,20,21) mittels einer zweiten Stelleinrichtung (19) gemeinsam zwischen den Schaltpositionen verlagerbar sind, sodass alle Schaltwellen stets in derselben Schaltposition vorliegen.

2. Aktuatoreinrichtung nach Anspruch 1, **dadurch gekennzeichnet, dass** jeder Schaltwelle (9,10,20,21) nur eine oder zumindest zwei Schaltschienen (5,6,7,8) zugeordnet sind.

3. Aktuatoreinrichtung nach einem der vorhergehenden Ansprüche, **dadurch gekennzeichnet, dass** die Schaltwellen (9,10,20,21) um eine gemeinsame Drehachse (30) drehbar gelagert sind.

4. Aktuatoreinrichtung nach einem der vorhergehenden Ansprüche, **dadurch gekennzeichnet, dass** jede Schaltwelle (9,10,20,21) eine Rückstelleinrichtung (34,35) aufweist, die sie in Richtung einer als Neutralposition vorliegenden Wahlposition drängt.

5. Aktuatoreinrichtung nach einem der vorhergehenden Ansprüche, **dadurch gekennzeichnet, dass** die erste Richtung die bezüglich der Drehachse (30) axiale Richtung und/oder die zweite Richtung die bezüglich der Drehachse (30) umfängliche Richtung ist, oder dass die erste Richtung die bezüglich der Drehachse (30) umfängliche Richtung und/oder die zweite Richtung die bezüglich der Drehachse (30) axiale Richtung ist.

6. Aktuatoreinrichtung nach einem der vorhergehenden Ansprüche, **dadurch gekennzeichnet, dass** die ersten Stelleinrichtungen (11,12,22,23) als Magnetstelleinrichtungen ausgebildet sind.

7. Aktuatoreinrichtung nach einem der vorhergehenden Ansprüche, **dadurch gekennzeichnet, dass** die zweite Stelleinrichtung (19) als mit den Schaltwellen (9,10,20,21) wirkverbundener Elektromotor ausgeführt ist.

8. Aktuatoreinrichtung nach einem der vorhergehenden Ansprüche, **dadurch gekennzeichnet, dass** die Schaltwellen (9,10,20,21) über eine Zwischenwelle (31) mit der zweiten Stelleinrichtung (19) wirkverbunden sind.

9. Aktuatoreinrichtung nach Anspruch 8, **dadurch gekennzeichnet, dass** die Schaltwellen (9,10,20,21) drehfest und axial verlagerbar an der Zwischenwelle (31) gelagert sind.

10. Getriebe (2) eines Kraftfahrzeugs, mit einer Aktuatoreinrichtung (1), die mehrere Schaltwellen (9,10,20,21) aufweist, die jeweils in einer ersten Richtung zwischen mehreren Wahlpositionen (13,14,15,16,17,18) und in einer zweiten Richtung zwischen mehreren Schaltpositionen verlagerbar sind und die jeweils über ein Verbindungselement (28,29) verfügen, das in zumindest einer der Wahlpositionen (13,14,15,16,17,18) mit wenigstens einer Schaltschiene (5,6,7,8) des Getriebes (2) zum Übertragen einer Bewegung der Schaltwelle (9,10,20,21) in der zweiten Richtung auf die Schaltschiene (5,6,7,8) in Wirkverbindung steht, **dadurch gekennzeichnet, dass** die Schaltwellen (9,10,20,21) derart aneinander gelagert sind, dass sie in der ersten Richtung gegeneinander beweglich und in der zweiten Richtung zueinander festgelegt sind, wobei die Wahlpositionen (13,14,15,16,17,18) der Schaltwellen (9,10,20,21) mittels mehrerer ersten Stelleinrichtungen (11,12,22,23) unabhängig einstellbar sind, und wobei die Schaltwellen (9,10,20,21) mittels einer zweiten Stelleinrichtung (19) gemeinsam zwischen den Schaltpositionen verlagerbar sind, sodass alle Schaltwellen stets in derselben Schaltposition vorliegen.

## Claims

1. Actuator device (1) for a gearbox (2) of a motor vehicle, having several switching shafts (9,10,20,21) which can be displaced respectively in a first direction between several selection positions (13,14,15,16,17,18) and in a second direction between several switching positions and which have respectively one connection element (28,29) which in at least one of the selection positions (13,14,15,16,17,18) are in operational connection with at least one gear shift rail (5,6,7,8) of the gearbox (2) for transmitting a movement of the switching shaft (9,10,20,21) in the second direction onto the gear shift rail (5,6,7,8), **characterised in that** the switching shafts (9,10,20,21) are supported against one another such that they are movable against one another in the first direction and are mutually fixed in the second direction, wherein the selection positions (13,14,15,16,17,18) of the switching shafts (9,10,20,21) can be set independently by means of several first actuating devices (11,12,22,23), and wherein the switching shafts (9,10,20,21) can be displaced by means of a second actuating device (19) together between the switching positions, such that all switching shafts are present always in the same switching position.

2. Actuator device according to claim 1, **characterised in that** to each switching shaft (9,10,20,21) are assigned only one or at least two gear shift rails (5,6,7,8).

3. Actuator device according to any of the preceding claims, **characterised in that** the switching shafts (9,10,20,21) are rotatably mounted about a shared axis of rotation (30).

4. Actuator device according to any of the preceding claims, **characterised in that** each switching shaft (9,10,20,21) has a return device (34,35) which forces it in the direction of a selection position present as a neutral position.

5. Actuator device according to any of the preceding claims, **characterised in that** the first direction is the direction which is axial with respect to the axis of rotation (30) and/or the second direction is the direction which is circumferential with respect to the axis of rotation (30), or that the first direction is the direction which is circumferential with respect to the axis of rotation (30) and/or the second direction is the direction which is axial with respect to the axis of rotation (30).

6. Actuator device according to any of the preceding claims, **characterised in that** the first actuating devices (11,12,22,23) are formed as magnetic actuating devices.

7. Actuator device according to any of the preceding claims, **characterised in that** the second actuating device (19) is in the form of an electric motor operationally connected with the switching shafts (9,10,20,21).

8. Actuator device according to any of the preceding claims, **characterised in that** the switching shafts (9,10,20,21) are operationally connected via an intermediate shaft (31) with the second actuating device (19).

9. Actuator device according to claim 8, **characterised in that** the switching shafts (9,10,20,21) are mounted non-rotationally and axially displaceably on the intermediate shaft (31).

10. Gearbox (2) of a motor vehicle, having an actuator device (1) which has several switching shafts (9,10,20,21) which are displaceable respectively in a first direction between several selection positions (13,14,15,16,17,18) and in a second direction between several switching positions and which have respectively one connection element (28,29), which in at least one of the selection positions (13,14,15,16,17,18) is in operational connection with at least one gear shift rail (5,6,7,8) of the gearbox (2) for transmitting a movement of the switching shaft (9,10,20,21) in the second direction onto the gear shift rail (5,6,7,8), **characterised in that** the switching shafts (9,10,20,21) are supported against one another such that they are movable against one another in the first direction and are mutually fixed in the second direction, wherein the selection positions (13,14,15,16,17,18) of the switching shafts (9,10,20,21) can be set independently by means of several first actuating devices (11,12,22,23), and wherein the switching shafts (9,10,20,21) can be displaced by means of a second actuating device (19) together between the switching positions, such that all switching shafts are present always in the same switching position.

## Revendications

1. Dispositif d'actionnement (1) pour une boîte de vitesse (2) d'un véhicule automobile, avec plusieurs arbres de changement de vitesse (9,10,20,21) qui peuvent être déplacés respectivement dans une première direction entre plusieurs positions optionnelles (13,14,15,16,17,18) et dans une seconde direction entre plusieurs positions de changement de vitesse et qui disposent respectivement d'un élément de liaison (28,29) qui dans au moins une des positions optionnelles (13,14,15,16,17,18) est en liaison active avec au moins un rail de changement de vitesse (5,6,7,8) de la boîte de vitesse (2) pour transmettre un mouvement de l'arbre de changement de vitesse (9,10,20,21) dans la seconde direction sur le rail de changement de vitesse (5,6,7,8), **caractérisé en ce que** les arbres de changement de vitesse (9,10,20,21) sont disposés l'un par rapport à l'autre de telle sorte que dans la première direction, ils sont mobiles l'un contre l'autre et dans la seconde direction, ils sont fixes l'un par rapport à l'autre, dans lequel les positions optionnelles (13,14,15,16,17,18) des arbres de changement de vitesse (9,10,20,21) peuvent être réglées indépendamment au moyen de plusieurs premiers dispositifs de réglage (11,12,22,23), et dans lequel les arbres de changement de vitesse (9,10,20,21) peuvent être déplacés conjointement au moyen d'un second dispositif de réglage (19) entre les positions de changement de vitesse, de sorte que tous les arbres de changement de vitesse se trouvent toujours dans la même position de changement de vitesse.

2. Dispositif d'actionnement selon la revendication 1, **caractérisé en ce qu'**à chaque arbre de changement de vitesse (9,10,20,21) n'est affecté qu'un ou au moins deux rails de changement de vitesse (5,6,7,8).

3. Dispositif d'actionnement selon l'une quelconque des revendications précédentes, **caractérisé en ce que** les arbres de changement de vitesse (9,10,20,21) sont disposés de façon à pouvoir tourner autour d'un axe de rotation (30) commun.

4. Dispositif d'actionnement selon l'une quelconque des revendications précédentes, **caractérisé en ce que** chaque arbre de changement de vitesse (9,10,20,21) présente un dispositif de rappel (34,35) qui le pousse dans la direction d'une position optionnelle en tant que position neutre.

5. Dispositif d'actionnement selon l'une quelconque des revendications précédentes, **caractérisé en ce que** la première direction est la direction axiale par rapport à l'axe de rotation (30) et/ou la seconde direction est la direction périphérique par rapport à l'axe de rotation (30), ou **en ce que** la première direction est la direction périphérique par rapport à l'axe de rotation (30) et/ou la seconde direction est la direction axiale par rapport à l'axe de rotation (30).

6. Dispositif d'actionnement selon l'une quelconque des revendications précédentes, **caractérisé en ce que** les premiers dispositifs de réglage (11,12,22,23) sont conçus comme des dispositifs de réglage magnétiques.

7. Dispositif d'actionnement selon l'une quelconque des revendications précédentes, **caractérisé en ce que** le second dispositif de réglage (19) est réalisé en tant que moteur électrique en liaison active avec les arbres de changement de vitesse (9,10,20,21).

8. Dispositif d'actionnement selon l'une quelconque des revendications précédentes, **caractérisé en ce que** les arbres de changement de vitesse (9,10,20,21) sont en liaison active par le biais d'un arbre intermédiaire (31) avec le second dispositif de réglage (19).

9. Dispositif d'actionnement selon la revendication 8, **caractérisé en ce que** les arbres de changement de vitesse (9,10,20,21) sont disposés fixement et de façon à pouvoir être déplacés axialement au niveau de l'arbre intermédiaire (31).

10. Boîte de vitesse (2) d'un véhicule automobile, avec un dispositif d'actionnement (1) qui présente plusieurs arbres de changement de vitesse (9,10,20,21) qui peuvent être déplacés respectivement dans une première direction entre plusieurs positions optionnelles (13,14,15,16,17,18) et dans une seconde direction entre plusieurs positions de changement de vitesse et qui disposent respectivement d'un élément de liaison (28,29) qui dans au moins une des positions optionnelles (13,14,15,16,17,18) est en liaison active avec au moins un rail de changement de vitesse (5,6,7,8) de la boîte de vitesse (2) pour transmettre un mouvement de l'arbre de changement de vitesse (9,10,20,21) dans la seconde direction sur le rail de changement de vitesse (5,6,7,8), **caractérisé en ce que** les arbres de changement de vitesse (9,10,20,21) sont disposés l'un par rapport à l'autre de telle sorte que dans la première direction, ils sont mobiles l'un contre l'autre et dans la seconde direction, ils sont fixes l'un par rapport à l'autre, dans lequel les positions optionnelles (13,14,15,16,17,18) des arbres de changement de vitesse (9,10,20,21) peuvent être réglées indépendamment au moyen de plusieurs premiers dispositifs de réglage (11,12,22,23), et dans lequel les arbres de changement de vitesse (9,10,20,21) peuvent être déplacés conjointement au moyen d'un second dispositif de réglage (19) entre les positions de changement de vitesse, de sorte que tous les arbres de changement de vitesse se trouvent toujours dans la même position de changement de vitesse.
